# EUROPÄISCHE PATENTSCHRIFT

(11) **EP 1 051 575 B1**
(45) Veröffentlichungstag und Bekanntmachung des Hinweises auf die Patenterteilung: **31.07.2002**
(21) Anmeldenummer: 98906922.4
(22) Anmeldetag: 06.02.1998
(51) Int. Cl.: F16D 51/00

(54) **BREMSTRÄGERPLATTE FÜR EINE TROMMELBREMSE EINES KRAFTFAHRZEUGS**
BRAKE ANCHOR PLATE FOR A DRUM BRAKE OF A MOTOR VEHICLE
DISQUE DE SUPPORT DE FREIN POUR FREIN A TAMBOUR DE VEHICULE A MOTEUR

(43) Veröffentlichungstag der Anmeldung: 15.11.2000
(73) Patentinhaber: Volkswagen Aktiengesellschaft, 38436 Wolfsburg (DE)
(72) Erfinder: SINTRAM, Ulf, D-38547 Calberlah (DE)
(86) Internationale Anmeldenummer: EP9800634
(87) Internationale Veröffentlichungsnummer: WO9940338

(56) Entgegenhaltungen:
- DE-A- 4 212 356
- DE-A- 19 533 430
- DE-A- 19 705 831
- DE-A- 19 741 534
- DE-C- 19 622 520
- DE-U- 1 866 535

## Beschreibung

Die Erfindung bezieht sich auf eine Bremsträgerplatte für eine Trommelbremse eines Kraftfahrzeugs.

Bremsträgerplatten dienen in Innenbacken-Trommelbremsen zur schwenkbaren Anbringung der Bremsbacken und müssen dementsprechend die vom Fahrzeugrad über den Reibring auf die Bremsbacken übertragenen Kräfte und Momente aufnehmen und auf den jeweiligen Achszapfen übertragen.

Um die hohen Kräfte und Momente aufnehmen und übertragen zu können, wurden die Radträgerplatten bisher überwiegend aus Stahl gefertigt, insbesondere durch Tiefziehverfahren. Da die Wirkfläche zwischen den Bremsbacken und dem Reibring jedoch vor Feuchtigkeit und Schmutz gesichert sein muß, sind im radial äußeren Bereich der Bremsträgerplatte umlaufende Dichtringe zur Ausbildung eines Dichtlabyrinths erforderlich. Mit Tiefziehverfahren lassen sich dabei allenfalls gestufte Dichtlabyrinthe herstellen. Doppellabyrinthe, die zwei Dichtringe aufweisen und dadurch eine bessere Dichtwirkung besitzen, können nicht direkt durch Tiefziehverfahren ausgebildet werden. Hierfür muß ein zusätzlicher Dichtring anschließend auf der Bremsträgerplatte angebracht werden, z.B. durch Punktschweißungen, wodurch die Herstellungszeit und die Herstellungskosten deutlich erhöht werden.

Weiterhin wird im modernen Kraftfahrzeugbau die Verwendung von Leichtmetallen zur Gewichtsersparung und somit zur Absenkung des Kraftstoffverbrauchs des Fahrzeugs angestrebt, wobei die Herstellung von Leichtmetallteilen durch Tiefziehverfahren problematisch ist.

Die Verwendung von Tiefziehverfahren erlaubt femer nicht eine Ausbildung der Bremsträgerplatte mit variabler Dicke, die den bei Bremsvorgängen auftretenden Kräften angepaßt und somit gewichtsoptimiert ist.

Die DE 42 12 356 A1 beschreibt eine Bremsträgerplatte für Trommelbremsen, die durch ein Druckgußverfahren unter Verwendung einer Aluminiumlegierung oder eines auf Aluminium basierenden Werkstoffs hergestellt ist. Besondere Abschnitte, die mit höheren Kräften beaufschlagt werden, werden mit einer größeren Dicke ausgebildet als die übrigen Abschnitte. Der für die Abdichtung notwendige äußere Dichtring wird beim Druckgußverfahren ausgebildet, so daß die ganze Bremsträgerplatte einteilig durch ein Herstellungsverfahren hergestellt werden kann. In die größeren Kräften ausgesetzten oder einer Abnutzung unterworfenen Abschnitte werden dabei Eisenstücke eingebettet.

Nachteilhaft an einer derartigen Bremsträgerplatte ist jedoch ihre geringe Steifigkeit gegenüber den beim Bremsbetrieb auftretenden Belastungen.

DE-U-1 866 535 offenbart eine Kraftfahrzeug- Trommelbremse mit einer Bremsträger platte aus Aluminiumguß, die eine radial innen angeordnete Achszapfenaufnahme besitzt. Die Bremsbacken sind an einem an der Bremsträgerplatte befestigten Bolzen schwenkbar angeordnet.

Daran befindet sich noch eine Scheibe, die ein seitliches Ausweichen der Bremsbacken verhindern soll.

Der Erfindung liegt die Aufgabe zugrunde, eine Bremsträgerplatte zu schaffen, die ein geringes Gewicht aufweist, kostengünstig herzustellen ist und dennoch hinreichend steif ist, um auch hohe Kräfte und Momente, insbesondere Axialkräfte und -momente von den Bremsbacken aufnehmen und auf den Achszapfen übertragen zu können.

Diese Aufgabe wird durch eine Bremsträgerplatte nach Anspruch 1 gelöst. Die Unteransprüche beschreiben bevorzugte Weiterbildungen.

Erfindungsgemäß sind somit zur Versteifung der Bremsträgerplatte im wesentlichen radial verlaufende Rippen ausgebildet, die von einem, um die Achszapfenaufnahme umlaufenden Kragen zu den Auflagepunkten der Bremsbacken hin verlaufen. Der Erfindung liegt die Erkenntnis zugrunde, daß bei einem Bremsbetrieb die von den Bremsbacken auf die Bremsträgerplatte ausgeübten Kräfte eine Verformung der Bremsträgerplatte auch in axialer Richtung bewirken, so daß die Bremsträgerplatte sich verbiegt und die Bremsbacken dementsprechend Axialkräfte, d.h. Kräfte in FahrzeugQuerrichtung auf die Bremsträgerplatte ausüben. Durch die Ausbildung von Rippen auf dem Bremsträgerblech, die von der Achszapfenanbindung im wesentlich radial nach außen zu den Auflagepunkten der Bremsbacken hin verlaufen, können diese Kräfte gut aufgenommen werden, so daß die Bremsträgerplatte eine hinreichende Steifigkeit besitzt, ohne daß der ganze äußere Bereich der Bremsträgerplatte mit einer größeren Dicke ausgebildet werden muß. Der um die Achszapfenaufnahme angeordnete umlaufende Kragen dient dabei zur Versteifung und zur Aufnahme der Kräfte von den Auflagepunkten. Somit kann eine hinreichende Steifigkeit des Bremsträgerblechs gewährleistet werden, so daß die Bremsträgerplatte als solches dünner und mit weniger Materialaufwand ausgebildet werden kann.

Um die Auflagepunkte wird auf vorteilhafte Weise eine Wabenstruktur ausgebildet werden, so daß die auf die Auflagepunkte einwirkenden Kräfte direkt von den Wabenstrukturen aufgenommen und über die Rippen zu den um die Achzapfenaufnahme umlaufenden Kragen übertragen werden können.

Die Bremsträgerplatte kann weiterhin mit unterschiedlicher Materialstärke ausgebildet werden, wobei insbesondere die Lagerpunkte der Bremsbacken an der Bremsträgerplatte und der Bereich um die Achszapfenanbindung mit einer größeren Dicke ausgebildet sind.

Die Erfindung wird im folgenden an einigen Ausführungsformen anhand der beiliegenden Zeichnungen näher erläutert. Es zeigen:
- Figur 1: eine perspektivische Hinteransicht einer Radträgerplatte gemäß einer ersten Ausführungsform der Erfindung;
- Figur 2: eine Hinteransicht dieser Radträgerplatte;
- Figur 3: eine Schnittansicht einer Radträgerplatte entlang der Linie III-III in Figur 2 gemäß einer Ausführungsform der Erfindung;
- Figur 4: eine Schnittansicht entlang der Linie IV-IV in Figur 3.

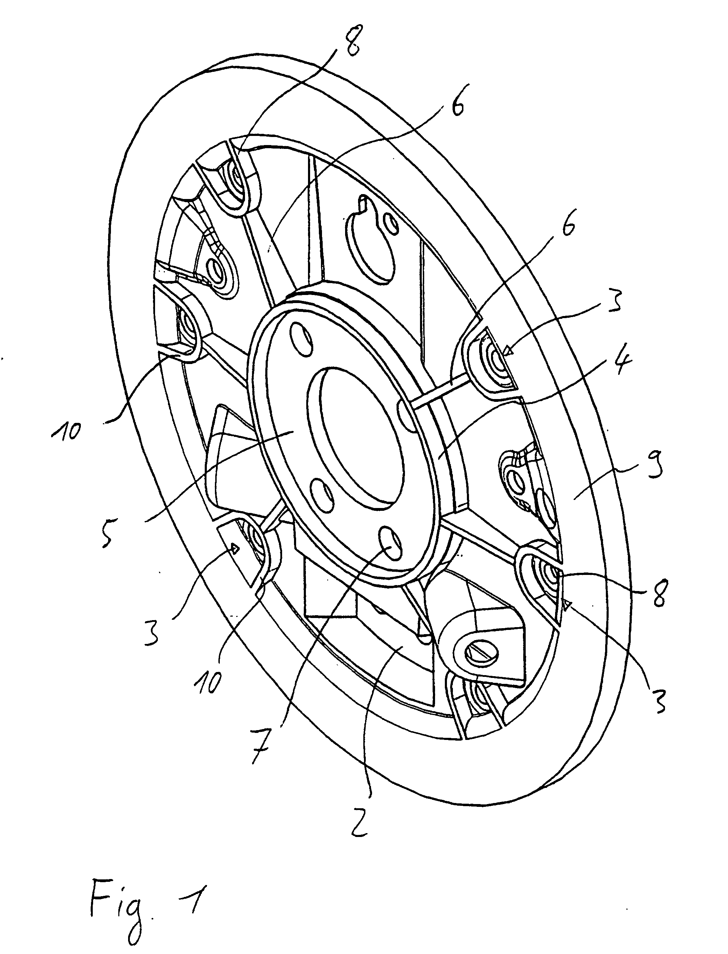

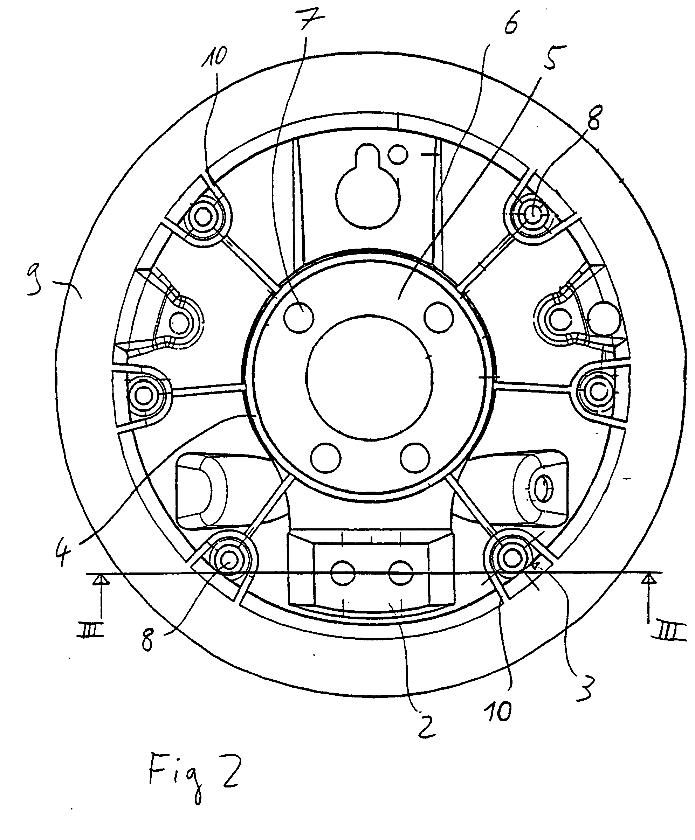

Eine Bremsträgerplatte ist gemäß Figur 1 und 2 kreisförmig ausgebildet und weist in ihrer Mitte eine Achzapfenaufnahme 5 mit einer zentralen Öffnung auf, wobei die Bremsträgerplatte über Schraubenlöcher 7 am Achszapfen festgeschraubt werden kann. In ihrem unteren Bereich weist die Bremsträgerplatte auf ihrer Vorderseite, die bei Anbringung der Bremsträgerplatte im Fahrzeugrad nach außen zeigt, einen axial vorstehenden Dom 2 auf, der in bekannter Weise zur gelenkigen Anbindung der Bremsbacken der Innenbacken-Trommelbremse dient. Die beiden Bremsbacken der Trommelbremse liegen dabei in Auflagebereichen 3 auf der Bremsträgerplatte auf, wobei in der Bremsträgerplatte in Umfangsrichtung verteilte Löcher 8 für die Aufnahme von Kunststoffclipsen vorgesehen sind, die als Auflagefläche für die Bremsbacken dienen. Im radialen Außenbereich 9 sind zwei konzentrisch angeordnete Dichtringe 11 und 12 auf der Vorderseite der Bremsträgerplatte vorgesehen, um zusammen mit entsprechenden Dichtringen der Bremstrommel das Eindringen von Schmutz und Wasser in den Innenbereich der Trommelbremse und somit zwischen die Bremsbacken und den Reibring zu verhindem.

Erfindungsgemäß ist auf der in Figur 1 und 2 ersichtlichen Rückseite der Bremsträgerplatte um die Achszapfenaufnahme 5 herum ein kreisförmiger umlaufender Kragen 4 ausgebildet, der eine Versteifung des inneren Bereichs der Radträgerplatte bewirkt. Von dem umlaufenden Kragen 4 verlaufen radial nach außen Rippen 6, die in Wabenstrukturen 10 um die Löcher 8 für die Kunststoffclipse aufgenommen werden.

Die Bremsträgerplatte wird aus Aluminium, einer Aluminiumlegierung bzw. einem auf einer Aluminiumlegierung beruhenden Verbundwerkstoff durch ein Druckgußverfahren hergestellt. Dadurch kann die Bremsträgerplatte einteilig hergestellt werden, so daß sowohl die äußeren Dichtringe 11 und 12 auf der Vorderseite der Bremsträgerplatte als auch der innere umlaufende Kragen 4, die Rippen 6 und die Wabenstrukturen 10 auf der Rückseite der Bremsträgerplatte integriert und somit die ganze Bremsträgerplatte einteilig hergestellt werden kann. Die Achszapfenaufnahme 5 und der Dom 2 können dabei mit einer größeren Materialstärke, z. B. 5 mm, und die im anderen Bereich mit einer dünneren Materialstärke, z. B. 2, 5 mm, ausgebildet werden.

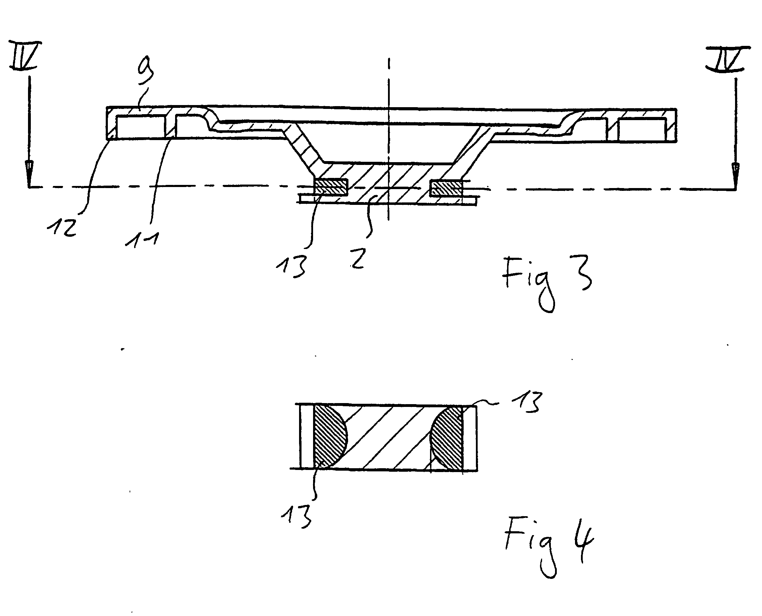

Bei Bremsvorgängen werden von den Bremsbacken Kräfte auf den als Schwenklager dienenden Dom 2 ausgeübt, wobei bei der üblichen Verwendung einer auflaufenden und einer ablaufenden Bremsbacke die Kräfte der auflaufenden Bremsbacke durch deren Selbstverstärkung deutlich höher sind als die von der ablaufenden Bremsbacke ausgeübten Kräfte. Da der Dom von der Bremsträgerplatte axial vorsteht, wirken diese Kräfte außerhalb der Bremsträgerplattenebene und müssen axial versetzt von der Achszapfenaufnahme 5 auf den Achzapfen übertragen werden. Somit werden in der Bremsträgerplatte Scherkräfte erzeugt, die zu einem teilweisen Verbiegen der Bremsträgerplatte in axialer Richtung führen. Dadurch liegen die Bremsbacken nicht mehr kräftefrei auf den Auflagebereichen 3 auf, sondem üben axiale Kräfte auf die Auflagebereiche aus, die den axialen Scherkräften entgegenwirken. Der umlaufende Kragen 4, die Rippen 6 und die Wabenstrukturen 10 auf der Rückseite der Bremsträgerplatte bewirken dabei zum einen eine genügend hohe Steifigkeit der Bremsträgerplatte gegenüber diesen Kräften und bewirken zum anderen, daß die auf die Auflagebereiche 3 ausgeübten Kräfte über die Wabenstrukturen 10, die Rippen 6 radial nach innen geleitet werden und vom umlaufenden Kragen 4 gleichmäßig in Umfangsrichtung verteilt werden, so daß sie von der Achszapfenaufnahme 5 auf den Achszapfen übertragen werden können. Durch die Ausbildung dieser Strukturen können die äußeren Bereiche der Bremsträgerplatte, die ansonsten keinen weiteren starken Kräften ausgesetzt sind, d. h. alle Bereiche außer der Achszapfenaufnahme 5 und dem Dom 2, mit einer geringen Wandstärke ausgebildet werden, so daß die Bremsträgerplatte gewichtsund kostenoptimiert mit wenig Materialaufwand hergestellt werden kann. Da diese Strukturen auf der Rückseite der Platte angeordnet sind, behindern sie die Bremsbacken auf der Vorderseite der Bremsträgerplatte nicht. Weiterhin ergibt sich, wie aus Figur 3 ersichtlich ist, keine Erhöhung der axialen Bauraumtiefe der Bremsträgerplatte, da durch die auf der Vorderseite der Bremsträgerplatte angeordneten Dichtringe 11 und 12 bereits eine entsprechende axiale Bauraumtiefe vorgegeben wird.

Die Löcher 7 in der Achszapfenaufnahme 5 für die Anbindung am Achszapfen, die Löcher 8 für die Kunststoffclipse in den Auflagebereichen 3, das zentrale Loch für die Achszapfenaufnahme sowie die weiteren gegebenenfalls vorzusehenen Löcher in der Bremsträgerplatte können dabei direkt beim Gießen ausgebildet werden, so daß sie nicht nachträglich ausgestanzt werden müssen.

Um eine bessere Abstützung der Bremsbacken am Dom 2 zu erreichen, können gemäß Figur 3 und 4 Abstützteile 13 aus einem festeren Material, z. B. Eisen oder Stahl, in den Dom 2 von außen eingesetzt werden. Hierdurch kann die Festigkeit des Dombereichs gegenüber den von den Bremsbacken ausgeübten Kräften deutlich erhöht werden, ohne das Gesamtgewicht der Bremsträgerplatte deutlich zu erhöhen. Die Abstützteile können z.B. direkt bei der Herstellung der Bremsträgerplatte eingegossen werden. Altemativ dazu können sie in Nute oder Ausnehmungen in dem Dom z. B. im wesentlichen in radialer Richtung eingeschoben werden, wobei die Nute z.B. bereits beim Gießvorgang ausgebildet werden können. In diesem Fall sollten die Abstützteile nach dem Einfügen durch Umbiegen eines Aluminiumrandes verstemmt werden, um einen festen Sitz zu gewährleisten.

## Patentansprüche

1. Bremsträgerplatte für eine Innenbacken-Trommelbremse eines Kraftfahrzeuges, die als Gußteil aus einem Leichtmetall, insbesondere Aluminium, einer Leichtmetallegierung oder einem auf Leichtmetall beruhenden Verbundwerkstoff als Gußteil hergestellt ist, umfassend eine radial innen angeordnete Achszapfenaufnahme (5) zur Anbindung an einen Achszapfen, und mehrere Auflagebereiche (3) zur axialen Abstützung der Innenbacken, die (3) in Umfangsrichtung verteilt radial außen um die Achszapfenaufnahme (5) herum angeordnet sind, wobei an der Achszapfenaufnahme (5) ein umlaufender Kragen (4) ausgebildet ist, an den Auflagebereichen (3) jeweils eine Wabenstruktur (10) mit erhöhter Wanddicke ausgebildet ist und der umlaufende Kragen (4) mit jeder Wabenstruktur (10) durch eine im wesentlichen radial verlaufende Rippe (6) verbunden ist.

2. Bremsträgerplatte nach Anspruch 1, **dadurch gekennzeichnet, daß** diese ein eingegossenes Loch für die Anbindung des Achszapfens aufweist.

3. Bremsträgerplatte nach Anspruch 1 oder 2, **dadurch gekennzeichnet, daß** die Wabenstrukturen (10) jeweils ein Loch (8) umgeben, an dem eine Kontakteinrichtung zur axialen Anlage gegen eine Bremsbacke anbringbar ist.

4. Bremsträgerplatte nach Anspruch 3, **dadurch gekennzeichnet, daß** die Löcher (8) in den Auflagebereichen (3) eingegossen sind.

5. Bremsträgerplatte nach einem der Ansprüche 1 bis 4, **dadurch gekennzeichnet, daß** diese unterschiedliche Materialstärken aufweist.

6. Bremsträgerplatte nach Anspruch 5, **dadurch gekennzeichnet, daß** ein Anbindungsbereich (2) für die Bremsbacken vorgesehen ist, der mit einer größeren Materialstärke ausgebildet ist.

7. Bremsträgerplatte nach Anspruch 5 oder 6, **dadurch gekennzeichnet, daß** die Achszapfenaufnahme (5) mit einer größeren Materialstärke ausgebildet ist.

8. Bremsträgerplatte nach Anspruch 6 und 7, **dadurch gekennzeichnet, daß** der Anbindungsbereich (2) zur Anlenkung der Bremsbacken radial außerhalb des Kragens (4) angeordnet ist.

9. Bremsträgerplatte nach einem der Ansprüche 1 bis 8, **dadurch gekennzeichnet, daß** Abstützteile (13), die in einem Anbindungsbereich (2) für die Bremsbacke vorgesehen sind, aus Eisen oder Stahl bestehen.

10. Bremsträgerplatte nach Anspruch 9, **dadurch gekennzeichnet, daß** die Abstützteile (13) in die Bremsträgerplatte eingegossen sind.

11. Bremsträgerplatte nach einem der Ansprüche 1 bis 10, **dadurch gekennzeichnet, daß** auf einer dem umlaufenden Kragen (4) und den Rippen (6) entgegengesetzten Seite radial außen zwei Dichtringe (11, 12) für eine Doppellabyrinthdichtung ausgebildet sind.

## Claims

1. Brake carrier plate for an internally acting shoe drum brake of a motor vehicle, said brake carrier plate being produced as a casting from a light metal, in particular aluminium, or a light-metal alloy or as a casting from a composite material based on light metal, and comprising an axle-journal receptacle (5), arranged radially on the inside, for connection to an axle journal, and a plurality of bearing regions (3) for the axial support of the internally acting shoes, which bearing regions (3) are arranged around the axle-journal receptacle (5) radially on the outside, so as to be distributed in the circumferential direction, a peripheral collar (4) being formed on the axle-journal receptacle (5), a honeycomb structure (10) with an increased wall thickness being formed on each of the bearing regions (3), and the peripheral collar (4) being connected to each honeycomb structure (10) by means of a rib (6) running essentially radially.

2. Brake carrier plate according to Claim 1, **characterized in that** it has an integrally cast hole for the connection of the axle journal.

3. Brake carrier plate according to Claim 1 or 2, **characterized in that** the honeycomb structures (10) in. each case surround a hole (8) in which a contact device for bearing axially against a brake shoe can be attached.

4. Brake carrier plate according to Claim 3, **characterized in that** the holes (8) are integrally cast into the bearing regions (3).

5. Brake carrier plate according to one of Claims 1 to 4, **characterized in that** it has different material thicknesses.

6. Brake carrier plate according to Claim 5, **characterized in that** a connection region (2) produced with a greater material thickness is provided for the brake shoes.

7. Brake carrier plate according to Claim 5 or 6, **characterized in that** the axle-journal receptacle (5) is produced with a greater material thickness.

8. Brake carrier plate according to Claim 6 and 7, **characterized in that** the connection region (2) for the articulation of the brake shoes is arranged radially outside the collar (4).

9. Brake carrier plate according to one of Claims 1 to 8, **characterized in that** the supporting parts (13) which are provided in a connection region (2) for the brake shoe consist of iron or steel.

10. Brake carrier plate according to Claim 9, **characterized in that** the supporting parts (13) are integrally cast into the brake carrier plate.

11. Brake carrier plate according to Claims 1 to 10, **characterized in that** two sealing rings (11, 12) for a double labyrinth seal are formed, radially on the outside, on a side opposite to the peripheral collar (4) and the ribs (6).

## Revendications

1. Plateau de support de frein pour un frein à tambour à mâchoires internes d'un véhicule, fabriqué sous forme de pièce moulée en fonte à partir d'un métal léger, en particulier de l'aluminium, un alliage de métal léger ou un matériau composite à base d'un métal léger sous forme de pièce moulée en fonte, comprenant un logement de tourillon (5) disposé radialement à l'intérieur pour se raccorder à un tourillon, et plusieurs zones d'appui (3) pour le support axial des mâchoires internes, qui (3) sont disposées radialement à l'extérieur réparties sur le pourtour tout autour du logement de tourillon (5), un rebord périphérique (4) étant réalisé sur le logement de tourillon (5), une structure en nid d'abeilles (10) ayant une épaisseur de paroi accrue étant formée à chaque fois sur les zones d'appui (3), et le rebord périphérique (4) étant connecté à chaque structure en nid d'abeilles (10) par une nervure (6) s'étendant essentiellement radialement.

2. Plateau de support de frein selon la revendication 1, **caractérisé en ce que** celui-ci présente un trou venu de fonderie pour le raccord du tourillon.

3. Plateau de support de frein selon la revendication 1 ou 2, **caractérisé en ce que** les structures en nid d'abeilles (10) entourent à chaque fois un trou (8), sur lequel un dispositif de contact peut être rapporté pour l'application axiale contre une mâchoire de frein.

4. Plateau de support de frein selon la revendication 3, **caractérisé en ce que** les trous (8) sont venus de fonderie dans les zones d'appui (3).

5. Plateau de support de frein selon l'une quelconque des revendications 1 à 4, **caractérisé en ce que** celui-ci présente différentes épaisseurs de matériau.

6. Plateau de support de frein selon la revendication 5, **caractérisé en ce qu**'il est prévu une zone de raccord (2) pour les mâchoires de frein, laquelle est réalisée avec une plus grosse épaisseur de matériau.

7. Plateau de support de frein selon la revendication 5 ou 6, **caractérisé en ce que** le logement de tourillon (5) est réalisé avec une plus grosse épaisseur de matériau.

8. Plateau de support de frein selon les revendications 6 et 7, **caractérisé en ce que** la zone de raccord (2) pour l'articulation des mâchoires de frein est disposée radialement à l'extérieur du rebord (4).

9. Plateau de support de frein selon l'une quelconque des revendications 1 à 8, **caractérisé en ce que** des pièces d'appui (13) qui sont prévues dans une zone de raccord (2) pour la mâchoire de frein se composent de fer ou d'acier.

10. Plateau de support de frein selon la revendication 9, **caractérisé en ce que** les pièces d'appui (13) sont venues de fonderie dans le plateau de support de frein.

11. Plateau de support de frein selon l'une quelconque des revendications 1 à 10, **caractérisé en ce que** deux bagues d'étanchéité (11, 12) pour un joint à labyrinthe double sont formées radialement à l'extérieur sur un côté opposé au rebord périphérique (4) et aux nervures (6).
